# EUROPÄISCHE PATENTANMELDUNG

(11) **EP 4 775 443 A1**
(43) Veröffentlichungstag der Anmeldung: **15.07.2026**
(21) Anmeldenummer: 25223186.5
(22) Anmeldetag: 12.12.2025
(51) Int. Cl.: B60L 58/27, B60L 3/00, H01M 10/625

(54) **VERFAHREN ZUM ERWÄRMEN EINER BATTERIE UND BATTERIEANORDNUNG**

(30) Priorität: 08.01.2025 DE 102025100489
(71) Anmelder: Volkswagen Aktiengesellschaft, 38440 Wolfsburg (DE)
(72) Erfinder: Gaona, Dr. Daniel, 38440 Wolfsburg (DE); Schiedermeier, Maximilian, 38440 Wolfsburg (DE); Hartwig, Dr. Raphael, 38440 Wolfsburg (DE)

(57) **Zusammenfassung**

Die Erfindung betrifft ein Verfahren zum Erwärmen einer Batterie (2), wobei ein Stromrichter (3), der in einem Normalbetrieb zum Wechselrichten eines von der Batterie (2) bereitgestellten Gleichstroms in Phasenströme für eine elektrische Maschine (10) verwendet wird, derart angesteuert wird, dass im Stromrichter (3) durch aktive Entladung Wärme (6) erzeugt wird, wobei die erzeugte Wärme (6) mittels eines Kühlkreislaufs (4) von dem Stromrichter (3) zur Batterie (2) transportiert wird. Ferner betrifft die Erfindung eine Batterieanordnung (1), umfassend eine Batterie (2), einen Stromrichter (3), wobei der Stromrichter (3) in einem Normalbetrieb zum Wechselrichten eines von der Batterie (2) bereitgestellten Gleichstroms in Phasenströme für eine elektrische Maschine (10) verwendet wird, einen Kühlkreislauf (4), und eine Steuereinrichtung (5), wobei die Steuereinrichtung (5) dazu eingerichtet ist, den Stromrichter (3) während eines Erwärmungsbetriebs derart anzusteuern, dass durch aktive Entladung Wärme (6) im Stromrichter (3) erzeugt wird, wobei der Kühlkreislauf (4) dazu eingerichtet und derart angeordnet ist, die im Stromrichter (3) erzeugte Wärme (6) zur Batterie (2) zu transportieren.

## Beschreibung

Es ist bekannt, dass eine Leistungsfähigkeit von Batterien von Elektrofahrzeugen sehr temperaturempfindlich ist, insbesondere bei niedrigen Temperaturen. Daher ist eine Batterieheizung erforderlich, um die Temperatur der Batterie zum optimalen Laden und Entladen zu konditionieren. Ein Standardverfahren zum Laden von Batterien ist die Verwendung eines elektrischen Heizelements, auch PTC (Positive-Temperature-Coefficient Heating Element) genannt, das einen Widerstand gegen eine variable Spannung erzeugt, die von einem Leistungselektronikelement (Brücke) gesteuert wird. Ein Kühlmittel wird dann als Wärmetauscher verwendet, um die vom PTC erzeugte Wärme zur Batterie zu leiten. Trotz ihres unkomplizierten Ansatzes haben PTCs auch Nachteile. Insbesondere stellen sie eine zusätzliche Komponente im System dar, deren Kosten, Gewicht und Volumen sich nachteilig auf die Systemleistung auswirken.

Die EP 4 420 917 A1 beschreibt eine Erwärmungsvorrichtung für eine Fahrzeugbatterie. Es ist vorgesehen, dass mindestens ein Wechselrichter dadurch erwärmt wird, dass eine Steuereinheit für die Wärmeerzeugung des Wechselrichters veranlasst wird, einen vorbestimmten Strom für eine vorbestimmte Zeit durch den Wechselrichter zu leiten. Die Erwärmung des mindestens einen Wechselrichters bewirkt über einen Kühlkreislauf eine Erwärmung einer Hochspannungsbatterie (Speicherbatterie). Dementsprechend wird die Steuerung zum Aufwärmen der Hochspannungsbatterie (Speicherbatterie) einfach dadurch durchgeführt, dass der vorbestimmte Strom für eine vorbestimmte Zeit durch den Wechselrichter geleitet wird. Diese Wärmeerzeugungsregelung kann auch bei Fahrzeugen ohne Aufwärtswandler eingesetzt werden.

Der Erfindung liegt die Aufgabe zu Grunde, ein Verfahren zum Erwärmen einer Batterie und eine Batterieanordnung zu schaffen, bei der ein Erwärmen der Batterie verbessert ist.

Die Aufgabe wird erfindungsgemäß durch ein Verfahren mit den Merkmalen des Patentanspruchs 1 und eine Batterieanordnung mit den Merkmalen des Patentanspruchs 7 gelöst. Vorteilhafte Ausgestaltungen der Erfindung ergeben sich aus den Unteransprüchen. Insbesondere wird ein Verfahren zum Erwärmen einer Batterie zur Verfügung gestellt, wobei ein Stromrichter, der in einem Normalbetrieb zum Wechselrichten eines von der Batterie bereitgestellten Gleichstroms in Phasenströme für eine elektrische Maschine verwendet wird, derart angesteuert wird, dass im Stromrichter durch aktive Entladung Wärme erzeugt wird, wobei die erzeugte Wärme mittels eines Kühlkreislaufs von dem Stromrichter zur Batterie transportiert wird.

Ferner wird insbesondere eine Batterieanordnung geschaffen, umfassend eine Batterie, einen Stromrichter, wobei der Stromrichter in einem Normalbetrieb zum Wechselrichten eines von der Batterie bereitgestellten Gleichstroms in Phasenströme für eine elektrische Maschine verwendet wird, einen Kühlkreislauf, und eine Steuereinrichtung, wobei die Steuereinrichtung dazu eingerichtet ist, den Stromrichter während eines Erwärmungsbetriebs derart anzusteuern, dass durch aktive Entladung Wärme im Stromrichter erzeugt wird, wobei der Kühlkreislauf dazu eingerichtet und derart angeordnet ist, die im Stromrichter erzeugte Wärme zur Batterie zu transportieren.

Das Verfahren und die Batterieanordnung ermöglichen es, die Batterie zu erwärmen, ohne dass ein Strom über die elektrische Maschine geführt wird. Insbesondere sind die Strangströme bzw. Phasenströme der elektrischen Maschine gleich Null. Dies wird insbesondere durch die aktive Entladung erreicht. Bei der aktiven Entladung wird die Funktionalität der Halbleiterschalter bzw. des Stromrichters zur aktiven Entladung eines Zwischenkreiskondensators (engl. "active DC link discharge") ausgenutzt. Hierbei wird mittels der Halbleiterschalter des Stromrichters ein Kurzschluss zwischen der positiven und der negativen Stromschiene, die elektrisch mit der Batterie verbunden sind, hergestellt, sodass ein Strom zwischen den Stromschienen über die Halbleiterschalter fließt. Bei einem Fehler wird diese Funktionalität üblicherweise zum schnellen Entladen des Zwischenkreiskondensators verwendet. Diese Funktionalität machen sich das in dieser Offenbarung beschriebene Verfahren und die Batterieanordnung zunutze. Aufgrund des elektrischen Widerstands der Halbleiterschalter kommt es während der aktiven Entladung durch den Stromfluss zu einer Erwärmung der Halbleiterschalter. Diese Wärme wird mittels des Kühlkreislaufes zur Erwärmung der Batterie verwendet. Durch den mittels der aktiven Entladung hergestellten Kurzschluss fließt kein Strom über die Phasenstränge der elektrischen Maschine (Phasenströme = 0). Es kommt daher zu keinerlei Verlusten oder Störungen (z.B. Drehmomentwelligkeit, engl. als "ripple" bezeichnet, und/oder Vibrationen) durch die elektrische Maschine, sodass das Erwärmen der Batterie verbessert ist.

Zum Erwärmen werden die Halbleiterschalter entsprechend zum aktiven Entladen angesteuert. Das Steuern des Stromrichters während der Erwärmungsphase erfolgt insbesondere unter Berücksichtigung einer Batterietemperatur, die beispielsweise mittels mindestens eines Temperatursensors erfasst werden kann und/oder mittels eines Batteriemodells geschätzt werden kann.

Teile der Batterieanordnung, insbesondere die Steuereinrichtung, können einzeln oder zusammengefasst als eine Kombination von Hardware und Software ausgebildet sein, beispielsweise als Programmcode, der auf einer Recheneinrichtung, insbesondere einem Mikrocontroller oder Mikroprozessor, ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) und/oder Graphikprozessor (GPU) und/oder Digitaler Signalprozessor (DSP) ausgebildet sind. Die Steuereinrichtung kann insbesondere mindestens eine Recheneinrichtung und mindestens einen Speicher umfassen.

In einer Ausführungsform ist vorgesehen, dass als Kühlkreislauf zum Transportieren der erzeugten Wärme ein separater Kühlkreislauf oder ein von einem größeren Kühlkreislauf, der insbesondere eine elektrische Maschine einbindet, separierbarer Kühlkreislauf verwendet wird. Hierdurch kann ein Erwärmen von anderen thermischen Massen verhindert werden. Insbesondere kann hierdurch verhindert werden, dass eine elektrische Maschine ebenfalls erwärmt wird, was der Fall ist, wenn sich der Stromrichter und die elektrische Maschine einen gemeinsamen Kühlkreislauf teilen. Hierdurch kann ein Wärmetransport vom Stromrichter zur Batterie verbessert werden. Darüber hinaus kann eine Verlustleistung bzw. ein Energieverlust verringert werden, da die im Stromrichter erzeugte Wärmemenge nur zum Erwärmen der Batterie verwendet wird und keine weiteren thermischen Massen hierdurch miterwärmt werden. Der separate Kühlkreislauf ist insbesondere nur an den Stromrichter und die Batterie angebunden. Der Kühlkreislauf ist ansonsten in an sich bekannter Weise ausgebildet.

In einer Ausführungsform ist vorgesehen, dass während des Erwärmungsbetriebs mittels mindestens eines Bypassventils ein separater Kühlkreislauf aus dem separierbaren Kühlkreislauf hergestellt wird. Hierdurch kann für den Erwärmungsbetrieb aus einem größeren Kühlkreislauf, der beispielsweise auch die elektrische Maschine einbindet, ein separater (kleinerer) Kühlkreislauf ausgebildet werden, der nur den Stromrichter und die Batterie umfasst.

In einer Ausführungsform ist vorgesehen, dass bei einer Ansteuerung von Halbleiterschaltern des Stromrichters während des Erwärmungsbetriebs gegenüber einem Normalbetrieb geänderte Parameter verwendet werden. Hierdurch kann der Betrieb auf eine Erwärmung optimiert werden. Ferner können hierdurch Sicherheitsvorkehrungen gegen eine Schädigung der Halbleiterschalter aufgrund des Stromflusses getroffen werden, beispielsweise indem ein maximaler und/oder effektiver Strom durch die Halbleiterschalter begrenzt wird. Insbesondere werden die geänderten Parameter derart gewählt, dass eine Beeinträchtigung der Lebensdauer der Halbleiterschalter vermieden wird. Beispielsweise können über die Wahl einer Gatetreiberspannung Ein-/Aus-Widerstände reguliert werden. Es kann ferner eine Reihenfolge, in der Zweige des Stromrichters zum Ausbilden des Kurzschlusses verwendet werden, verändert werden (z.B. gleichzeitig oder nacheinander bzw. abwechselnd). Es kann eine Dauer und/oder eine Größe des Kurzschlussstroms definiert werden. Es kann ferner geregelt werden, wie oft bzw. mit welcher Frequenz die Kurzschlusspulse erfolgen. Die für das Erwärmen bei gegebenen Randbedingungen (z.B. Batterietemperatur) verwendeten Parameter können beispielsweise im Rahmen von empirischen Testreihen gewonnen werden. Die Parameter können in einem Speicher einer Steuereinrichtung hinterlegt sein, die den Stromrichter während des Erwärmungsbetriebs ansteuert. Die Parameter können insbesondere in Abhängigkeit von gegebenen Randbedingungen hinterlegt und/oder abgerufen werden.

In einer Ausführungsform ist vorgesehen, dass ein Strom durch Halbleiterschalter des Stromrichters während des Erwärmungsbetriebs durch Einstellen einer Spannung mittels eines zwischen die Batterie und den Stromrichter geschalteten Abwärts- oder Aufwärtswandler begrenzt wird. Hierdurch kann eine Schädigung und Beeinträchtigung der Lebensdauer der Halbleiterschalter verhindert werden. Die Spannung, die vom Abwärts- oder Aufwärtswandler dem Stromrichter während des Erwärmungsbetriebs bereitgestellt wird, ist hierbei derart gewählt, dass ein vorgegebener Grenzstrom beim Ausbilden des Kurzschlusse nicht überschritten wird. Wandlerparameter zum Ansteuern des Abwärts- oder Aufwärtswandlers können beispielsweise in einem Speicher einer bzw. der Steuereinrichtung hinterlegt sein, die den Abwärts- oder Aufwärtswandler während des Erwärmungsbetriebs ansteuert. Die Wandlerparameter können insbesondere in Abhängigkeit von gegebenen Randbedingungen hinterlegt und/oder abgerufen werden. Die Wandlerparameter können ebenfalls im Rahmen von empirischen Testreihen gewonnen werden.

In einer Ausführungsform ist vorgesehen, dass während des Erwärmungsbetriebs zusätzlich zum Stromrichter eine Verlustwärme von mindestens einer weiteren halbleiterbasierten Schaltvorrichtung mittels des Kühlkreislaufs zur Batterie transportiert wird. Hierdurch kann das Erwärmen weiter verbessert, insbesondere beschleunigt werden. Eine weitere halbleiterbasierte Schaltvorrichtung kann beispielsweise der voranstehend beschriebene Abwärts- oder Aufwärtswandler sein. Bei einem separaten oder separierbaren Kühlkreislauf ist die mindestens eine weitere halbleiterbasierte Schaltvorrichtung insbesondere ebenfalls in diesen Kühlkreislauf eingebunden.

Es wird ferner auch ein Fahrzeug geschaffen, umfassend mindestens eine Batterieanordnung nach einer der beschriebenen Ausführungsformen. Das Fahrzeug kann beispielsweise ein Kraftfahrzeug sein, insbesondere ein Elektrofahrzeug oder ein Hybridfahrzeug. Grundsätzlich kann das Fahrzeug aber auch in anderes Land-, Wasser-, Luft-, Schienen- oder Raumfahrzeug sein.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Batterieanordnung;
- Fig. 2: eine schematische Darstellung einer weiteren Ausführungsform der Batterieanordnung;
- Fig. 3: eine schematische Darstellung einer weiteren Ausführungsform der Batterieanordnung;
- Fig. 4: eine schematische Darstellung einer weiteren Ausführungsform der Batterieanordnung;
- Fig. 5: ein schematisches Ablaufdiagramm zur Verdeutlichung von Ausführungsformen des Verfahrens zum Erwärmen einer Batterie.

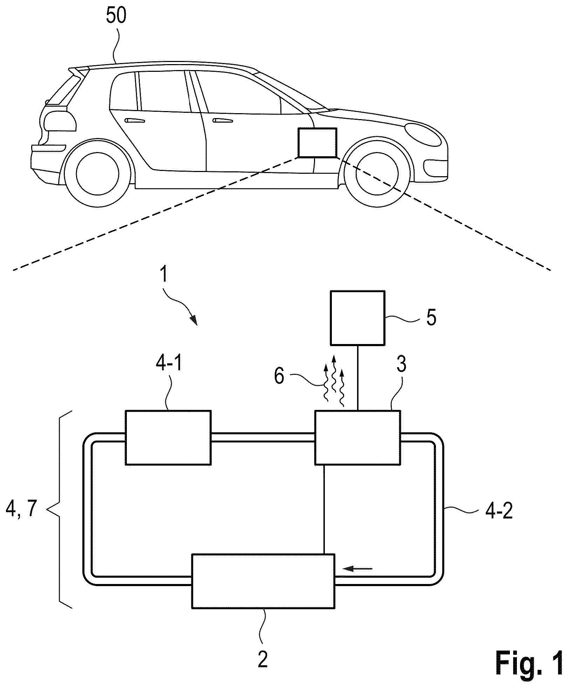

Die Fig. 1 zeigt eine schematische Darstellung einer Ausführungsform der Batterieanordnung 1. Das in dieser Offenbarung beschriebene Verfahren wird nachfolgend auch anhand der Batterieanordnung 1 verdeutlicht. Die Batterieanordnung 1 ist beispielsweise in einem Fahrzeug 50, insbesondere in einem Kraftfahrzeug, beispielsweise einem Elektro- oder Hybridfahrzeug angeordnet.

Die Batterieanordnung 1 umfasst eine Batterie 2, einen Stromrichter 3, einen Kühlkreislauf 4 und eine Steuereinrichtung 5. Der Stromrichter 3 wird in einem Normalbetrieb zum Wechselrichten eines von der Batterie 2 bereitgestellten Gleichstroms in Phasenströme für eine elektrische Maschine (nicht gezeigt) verwendet.

Die Steuereinrichtung 5 ist dazu eingerichtet, den Stromrichter 3 während eines Erwärmungsbetriebs derart anzusteuern, dass durch aktive Entladung Wärme 6 im Stromrichter 3 erzeugt wird. Der Erwärmungsbetrieb wird insbesondere gestartet, bevor der Batterie in einem Normalbetrieb Leistung entnommen (Entladen) oder hinzugefügt (Laden) werden soll. Durch die aktive Entladung wird ein Kurzschluss zwischen einer Plusleitung und einer Minusleitung über die Halbleiterschalter von mindestens einem Zweig des Stromrichters 3 ausgebildet, der zur Erwärmung der Halbleiterschalter des Stromrichters 3 führt. Der Stromrichter 3, insbesondere die Halbleiterschalter des Stromrichters 3, sind über einen Wärmetauscher thermisch an den Kühlkreislauf 4 gekoppelt und können ein Kühlmittel des Kühlkreislaufs 4 erwärmen.

Der Kühlkreislauf 4 ist dazu eingerichtet und derart angeordnet, die im Stromrichter 3 erzeugte Wärme 6 zur Batterie 2 zu transportieren. Der Kühlkreislauf 4 umfasst hierzu insbesondere eine Pumpe 4-1 und eine Fluidverbindung 4-2, in der ein Kühlmittel zwischen der Pumpe 4-1, dem Stromrichter 3 und der Batterie 2 in an sich bekannter Weise zirkuliert. In einem Normalbetrieb kann der Kühlkreislauf 4 zum Kühlen des Stromrichters 3, insbesondere zum Kühlen der Halbleiterschalter des Stromrichters 3, verwendet werden.

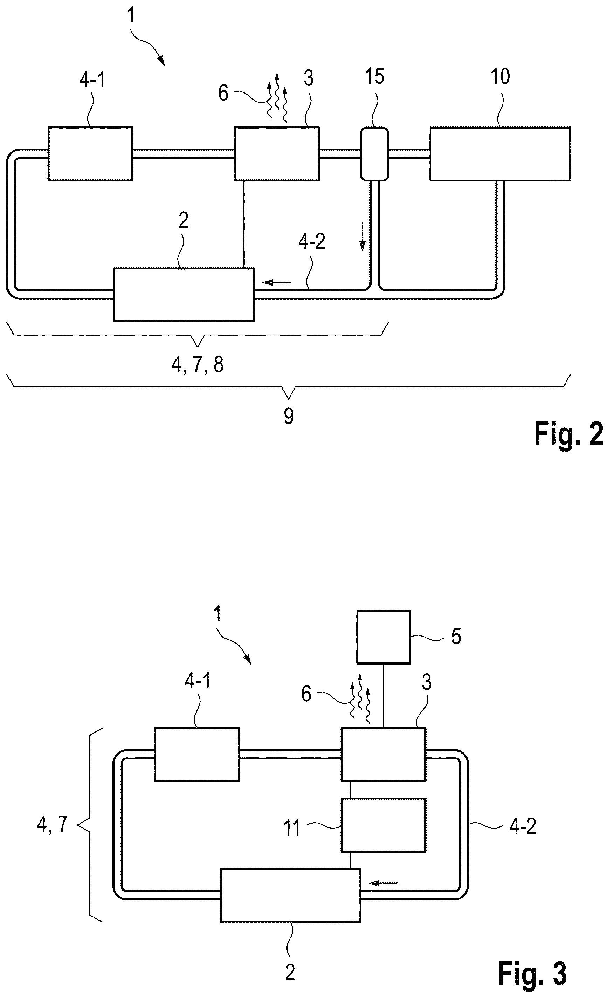

Es kann vorgesehen sein, dass als Kühlkreislauf 4 zum Transportieren der erzeugten Wärme 6 ein separater Kühlkreislauf 7 (Fig. 2) oder ein von einem größeren Kühlkreislauf, der insbesondere die elektrische Maschine 10 (Fig. 2) einbindet, separierbarer Kühlkreislauf verwendet wird.

Die Fig. 2 zeigt eine schematische Darstellung einer solchen Ausführungsform. Die Ausführungsform ist grundsätzlich wie die in der Fig. 1 gezeigte Ausführungsform ausgestaltet, gleiche Bezugszeichen bezeichnen gleiche Merkmale und Begriffe. Bei der Ausführungsform ist vorgesehen, dass während des Erwärmungsbetriebs mittels (mindestens) eines Bypassventils 15 ein separater Kühlkreislauf 7 aus dem separierbaren Kühlkreislauf 8 hergestellt wird. Der Kühlkreislauf 7 bzw. 8 ist beispielsweise Teil eines größeren Kühlkreislaufs 9, der auch die elektrische Maschine 10 einbindet. Mittels des Bypassventils 15 kann der separierbare Kühlkreislauf 8 von dem Teil, der die elektrische Maschine 10 einbindet, abgekoppelt werden, sodass der separate Kühlkreislauf 7 ausgebildet wird. Die thermische Masse der elektrischen Maschine 10 wird dann nicht mit erwärmt, sodass das Erwärmen der Batterie 2 schneller und energieeffizienter erfolgen kann.

Es kann vorgesehen sein, dass bei einer Ansteuerung von Halbleiterschaltern des Stromrichters 3 während des Erwärmungsbetriebs gegenüber einem Normalbetrieb geänderte Parameter verwendet werden. Die Parameter sind hierbei insbesondere derart gewählt, dass eine Schädigung der Halbleiterschalter, beispielsweise durch hohe Ströme, verhindert wird.

Die Fig. 3 zeigt eine schematische Darstellung einer weiteren Ausführungsform der Batterieanordnung 1. In dieser Ausführungsform ist ein Abwärts- oder Aufwärtswandler 11 vorgesehen, der zwischen die Batterie 2 und den Stromrichter 3 geschaltet ist. Es ist bei dieser Ausführungsform vorgesehen, dass ein Strom durch Halbleiterschalter des Stromrichters 3 während des Erwärmungsbetriebs durch Einstellen einer Spannung mittels des Abwärts- oder Aufwärtswandler 11 begrenzt wird. Hierzu wird der Abwärts- oder Aufwärtswandler 11 mittels der Steuereinrichtung 5 entsprechend angesteuert, beispielsweise indem er eine von der Batterie 2 bereitgestellte Spannung auf eine kleinere Spannung wandelt.

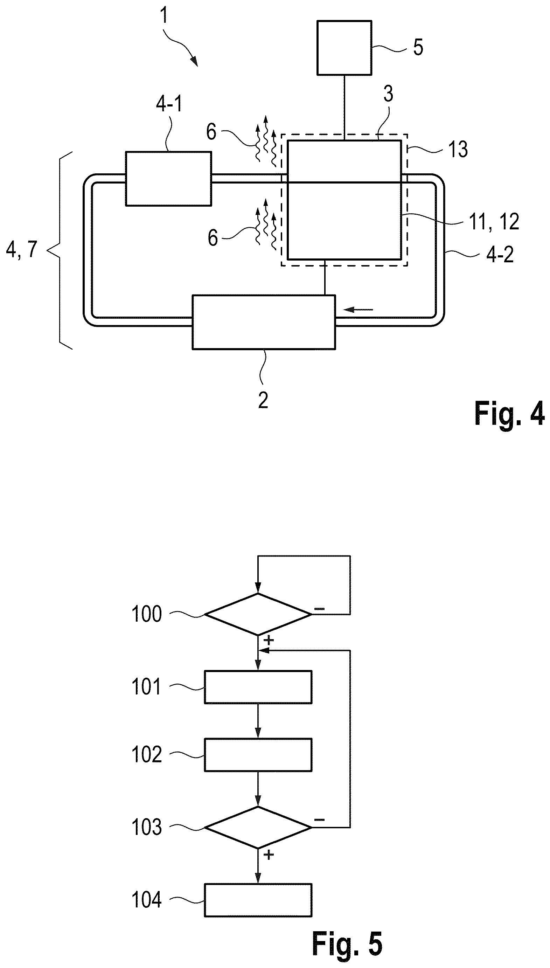

Die Fig. 4 zeigt eine schematische Darstellung einer weiteren Ausführungsform der Batterieanordnung 1. Es ist bei dieser Ausführungsform vorgesehen, dass während des Erwärmungsbetriebs zusätzlich zum Stromrichter 3 eine Verlustwärme von mindestens einer weiteren halbleiterbasierten Schaltvorrichtung 12 mittels des Kühlkreislaufs 4 zur Batterie 2 transportiert wird. Es ist insbesondere vorgesehen, dass die weitere halbleiterbasierte Schaltvorrichtung 12 ein Abwärts- oder Aufwärtswandler 11 ist, wie voranstehend beschrieben. Grundsätzlich können jedoch auch andere halbleiterbasierte Schaltvorrichtungen 12 eingegliedert werden, wie beispielsweise ein Ladegerät im Fahrzeug (On-Board-Charger, OBC) und/oder ein Spannungswandler für eine Niedervoltnetz oder ein Hochvoltnetz des Fahrzeugs. Es kann vorgesehen sein, dass der Stromrichter 3 und die mindestens eine weitere halbleiterbasierte Schaltvorrichtung 12 in einem gemeinsamen Gehäuse 13 angeordnet sind. Es ist hierdurch eine kompakte Einbindung in den Kühlkreislauf 4 möglich.

Die Fig. 5 zeigt ein schematisches Ablaufdiagramm einer Ausführungsform des Verfahrens zum Erwärmen einer Batterie. Das Verfahren wird beispielsweise mittels einer Batterieanordnung 1 ausgeführt, wie diese voranstehend mit Bezug auf die Figuren 1 bis 4 beschrieben wurde. Das Verfahren kann beispielsweise in einem Fahrzeug ausgeführt werden.

In einem Verfahrensschritt 100 wird überprüft, ob ein Normalbetrieb oder ein Erwärmungsbetrieb erfolgen soll. Soll ein Normalbetrieb erfolgen, so wird der Verfahrensschritt 100 wiederholt. Soll hingegen ein Erwärmungsbetrieb erfolgen, beispielsweise weil festgestellt wurde, dass eine Batterie auf eine vorgegebene Batterietemperatur konditioniert werden soll, so wird mit Verfahrensschritt 101 fortgefahren.

Im Verfahrensschritt 101 wird ein Stromrichter, der in einem Normalbetrieb zum Wechselrichten eines von der Batterie bereitgestellten Gleichstroms in Phasenströme für eine elektrische Maschine verwendet wird, derart angesteuert, dass im Stromrichter durch aktive Entladung Wärme erzeugt wird. Hierbei werden im Rahmen der aktiven Entladung eine positive und eine negative Stromschiene durch Ansteuern von Halbleiterschaltern von Zweigen des Stromrichters miteinander kurzgeschlossen. Durch den Stromfluss durch die Halbleiterschalter hindurch erwärmen sich diese.

Im Verfahrensschritt 102 wird die erzeugte Wärme mittels eines Kühlkreislaufs von dem Stromrichter zur Batterie transportiert.

Im Verfahrensschritt 103 wird überprüft, ob eine Batterietemperatur einen vorgegebenen Mindestwert erreicht hat. Ist dies der Fall, so wird das Verfahren beendet (Verfahrensschritt 104). Ist dies nicht der Fall, so werden die Verfahrensschritte 101 und 102 wiederholt. Die Batterietemperatur kann beispielsweise mittels mindestens eines Temperatursensors erfasst werden und/oder mittels eines Batterietemperaturmodells simuliert werden.

Die Verfahrensschritte 101 und 102 werden insbesondere parallel bzw. gleichzeitig ausgeführt.

Es kann vorgesehen sein, dass vor dem Starten mittels mindestens eines Bypassventils ein separater Kühlkreislauf aus dem separierbaren Kühlkreislauf hergestellt wird. Hierzu wird das mindestens eine Bypassventil entsprechend gestellt und angesteuert, insbesondere in eine Stellung gebracht, die den Kühlkreislauf von einem größeren Kühlkreislauf separiert. Nach Beenden des Erwärmungsbetriebs kann das mindestens eine Bypassventil vor der Rückkehr in den Normalbetrieb wieder in diejenige Stellung gebracht werden, in der der größere Kühlkreislauf ausgebildet ist.

Weitere Ausführungsformen des Verfahrens wurden voranstehend bereits mit Bezug auf die Batterieanordnung beschrieben.

### Bezugszeichenliste

- 1: Batterieanordnung
- 2: Batterie
- 3: Stromrichter
- 4: Kühlkreislauf
- 4-1: Pumpe
- 4-2: Fluidverbindung
- 5: Steuereinrichtung
- 6: Wärme
- 7: separater Kühlkreislauf
- 8: separierbarer Kühlkreislauf
- 9: größerer Kühlkreislauf
- 10: elektrische Maschine
- 11: Abwärts- oder Aufwärtswandler
- 12: halbleiterbasierte Schaltvorrichtung
- 13: Gehäuse
- 15: Bypassventil
- 50: Fahrzeug
- 100-104: Verfahrensschritte

## Patentansprüche

1. Verfahren zum Erwärmen einer Batterie (2),
wobei ein Stromrichter (3), der in einem Normalbetrieb zum Wechselrichten eines von der Batterie (2) bereitgestellten Gleichstroms in Phasenströme für eine elektrische Maschine (10) verwendet wird, derart angesteuert wird, dass im Stromrichter (3) durch aktive Entladung Wärme (6) erzeugt wird,
wobei die erzeugte Wärme (6) mittels eines Kühlkreislaufs (4) von dem Stromrichter (3) zur Batterie (2) transportiert wird.

2. Verfahren nach Anspruch 1, **dadurch gekennzeichnet, dass** als Kühlkreislauf (4) zum Transportieren der erzeugten Wärme (6) ein separater Kühlkreislauf (7) oder ein von einem größeren Kühlkreislauf (9) separierbarer Kühlkreislauf (8) verwendet wird.

3. Verfahren nach Anspruch 2, **dadurch gekennzeichnet, dass** während des Erwärmungsbetriebs mittels mindestens eines Bypassventils (15) ein separater Kühlkreislauf (7) aus dem separierbaren Kühlkreislauf (8) hergestellt wird.

4. Verfahren nach einem der vorangegangenen Ansprüche, **dadurch gekennzeichnet, dass** bei einer Ansteuerung von Halbleiterschaltern des Stromrichters (3) während des Erwärmungsbetriebs gegenüber einem Normalbetrieb geänderte Parameter verwendet werden.

5. Verfahren nach einem der vorangegangenen Ansprüche, **dadurch gekennzeichnet, dass** ein Strom durch Halbleiterschalter des Stromrichters (3) während des Erwärmungsbetriebs durch Einstellen einer Spannung mittels eines zwischen die Batterie (2) und den Stromrichter (3) geschalteten Abwärts- oder Aufwärtswandler (11) begrenzt wird.

6. Verfahren nach einem der vorangegangenen Ansprüche, **dadurch gekennzeichnet, dass** während des Erwärmungsbetriebs zusätzlich zum Stromrichter (3) eine Verlustwärme von mindestens einer weiteren halbleiterbasierten Schaltvorrichtung (12) mittels des Kühlkreislaufs (4) zur Batterie (2) transportiert wird.

7. Batterieanordnung (1), umfassend:
eine Batterie (2),
einen Stromrichter (3), wobei der Stromrichter (3) in einem Normalbetrieb zum Wechselrichten eines von der Batterie (2) bereitgestellten Gleichstroms in Phasenströme für eine elektrische Maschine (10) verwendet wird,
einen Kühlkreislauf (4), und
eine Steuereinrichtung (5), wobei die Steuereinrichtung (5) dazu eingerichtet ist, den Stromrichter (3) während eines Erwärmungsbetriebs derart anzusteuern, dass durch aktive Entladung Wärme (6) im Stromrichter (3) erzeugt wird,
wobei der Kühlkreislauf (4) dazu eingerichtet und derart angeordnet ist, die im Stromrichter (3) erzeugte Wärme (6) zur Batterie (2) zu transportieren.

8. Batterieanordnung (1) nach Anspruch 7, **dadurch gekennzeichnet, dass** der Kühlkreislauf (4) ein separater Kühlkreislauf (7) oder ein von einem größeren Kühlkreislauf (9) separierbarer Kühlkreislauf (8) ist.

9. Batterieanordnung (1) nach Anspruch 8, **gekennzeichnet durch** mindestens ein Bypassventil (15), wobei das mindestens eine Bypassventil (15) dazu eingerichtet ist, während des Erwärmungsbetriebs aus dem separierbaren Kühlkreislauf (8) einen separaten Kühlkreislauf (7) herzustellen.

10. Batterieanordnung (1) nach einem der Ansprüche 7 bis 9, **gekennzeichnet durch** einen Abwärts- oder Aufwärtswandler (11), der zwischen die Batterie (2) und den Stromrichter (3) geschaltet ist, wobei die Steuereinrichtung (5) dazu eingerichtet ist, den Abwärts- oder Aufwärtswandler (11) derart anzusteuern, dass ein Strom durch Halbleiterschalter des Stromrichters (3) während des Erwärmungsbetriebs durch Einstellen einer Spannung begrenzt ist.

11. Batterieanordnung (1) nach einem der Ansprüche 7 bis 10, **gekennzeichnet durch** mindestens eine weitere halbleiterbasierte Schaltvorrichtung (12), wobei die Batterieanordnung (1) dazu eingerichtet ist, dass während des Erwärmungsbetriebs zusätzlich zum Stromrichter (3) eine Verlustwärme von der mindestens einen weiteren halbleiterbasierten Schaltvorrichtung (12) mittels des Kühlkreislaufs (4) zur Batterie (2) transportiert wird.

12. Fahrzeug (50), umfassend mindestens eine Batterieanordnung (1) nach einem der Ansprüche 7 bis 11.
